# EUROPÄISCHE PATENTANMELDUNG

(11) **EP 4 276 323 A1**
(43) Veröffentlichungstag der Anmeldung: **15.11.2023**
(21) Anmeldenummer: 22172259.8
(22) Anmeldetag: 09.05.2022
(51) Int. Cl.: F16D 1/116

(54) **VERSCHLUSS ZUM SICHERN EINER KUPPLUNGSHÜLSE AUF EINER WELLE**

(71) Anmelder: Walterscheid GmbH, 53797 Lohmar (DE)
(72) Erfinder: SCHIFFBAUER, Bettina, 53797 Lohmar (DE); HECTOR, Martin, 53721 Siegburg (DE)
(74) Vertreter: Neumann Müller Oberwalleney Patentanwälte PartG mbB

(57) **Zusammenfassung**

Verschluss zum Sichern einer Kupplungshülse (7) auf einer Welle (9), umfassend: eine Kupplungshülse (7) mit einer entlang einer Längsachse (L) verlaufenden Aufnahme (9) zum Aufnehmen einer Welle (9),
mehrere Sperrkörper (14), die jeweils in einem radialen Durchbruch (13) der Kupplungshülse (7) zwischen einer Sperrstellung, in der die Sperrkörper (14) zum Eingreifen in eine Umfangsnut (12) der Welle (9) radial nach innen aus den Durchbrüchen (13) in die Aufnahme (8) vorstehen, und einer Freigabestellung radial bewegbar aufgenommen sind, und
einen Sperrring (16) (16), der zwischen einer geschlossenen Position und einer geöffneten Position relativ zur Kupplungshülse (7) axial verstellbar ist, wobei in der geschlossenen Position ein Sperrabschnitt (18) des Sperrrings (16) die Sperrkörper (14) radial außen umgreift und in der Sperrstellung hält,
**dadurch gekennzeichnet,**
dass der Sperrring (16) in der geöffneten Position zwischen einer zur Längsachse (L) zentrierten Stellung und einer exzentrischen Stellung parallel zur Längsachse (L) verstellbar ist, und
dass in der exzentrischen Stellung des Sperrrings (16) sich zumindest ein schaltender Sperrkörper (14) der mehreren Sperrkörper (14) in der Sperrstellung befindet und nach radial außen gegen einen Betätigungsabschnitt (17) des Sperrrings (16) abgestützt ist, wobei durch Verlagern des zumindest einen schaltenden Sperrkörpers (14) in die Freigabestellung der Sperrring (16) über den Betätigungsabschnitt (17) in die zentrierte Stellung überführbar ist.

## Beschreibung

Die Erfindung betrifft einen Verschluss zum Sichern einer Kupplungshülse auf einer Welle, insbesondere einer Kupplungshülse einer Gelenkwelle einer Landmaschine auf einer Zapfwelle eines Schleppers. Der Verschluss weist eine Kupplungshülse mit einer entlang einer Längsachse verlaufenden Aufnahme zum Aufnehmen einer Welle und mehrere Sperrkörper, die jeweils in einem radialen Durchbruch der Kupplungshülse zwischen einer Sperrstellung, in der die Sperrkörper zum Eingreifen in eine Umfangsnut der Welle radial nach innen aus den Durchbrüchen in die Aufnahme vorstehen, und einer Freigabestellung radial bewegbar aufgenommen sind, auf. Ferner weist der Verschluss einen Sperrring auf, der zwischen einer geschlossenen Position und einer geöffneten Position relativ zur Kupplungshülse axial verstellbar ist, wobei in der geschlossenen Position ein Sperrabschnitt des Sperrrings die Sperrkörper radial außen umgreift und in der Sperrstellung hält.

Ein solcher Verschluss ist aus der DE 38 18 808 A1 bekannt, wobei eine Feder vorgesehen ist, die den Sperrring zur Einnahme der geschlossenen Position federbeaufschlagt. Die Feder ist einerseits gegen die Kupplungshülse und andererseits gegen den Sperrring abgestützt. Der Verschluss weist Mittel zur Arretierung des Sperrrings in der geöffneten Position und zum automatischen Aufheben der Arretierung beim Einführen einer Zapfwelle in die Aufnahme der Kupplungshülse auf. Hierzu weisen die Mittel zur Arretierung einen vom Sperrring separaten Steuerring auf, der in der geöffneten Position des Sperrrings relativ zu diesem zwischen einer Stellung konzentrisch zur Längsachse und einer Stellung exzentrisch zur Längsachse radial bewegbar angeordnet ist. In seiner Stellung exzentrisch zur Längsachse gelangt der Steuerring mit einem ersten Ende in einen Bereich eines Anschlags der Kupplungshülse, wobei der Sperrring an einem zweiten Ende des Steuerrings axial gegen diesen abgestützt ist. Somit ist der Sperrring indirekt über den Steuerring gegen den Anschlag abgestützt, sodass der Sperrring in einer arretierten geöffneten Position gehalten ist. Der Steuerring ist über eine Verstellfeder radial zur Einnahme der Stellung exzentrisch zur Längsachse mit Kraft beaufschlagt und stützt sich radial gegen einen der Sperrkörper ab. Wird nun die Welle in die Aufnahme eingeführt, so werden die Sperrkörper durch die Außenkontur der Welle radial nach außen bewegt. Dabei wird auch derjenige Sperrkörper bewegt, gegen den der Steuerring abgestützt ist. Der Steuerring wird somit von diesem Sperrkörper radial in die Stellung konzentrisch bzw. koaxial zur Längsachse bewegt. Hierbei gelangt der Steuerring außerhalb des Bereichs des Anschlags, sodass der Steuerring nicht mehr gegen den Anschlag axial abgestützt ist und die Feder, die den Sperrring axial beaufschlagt, den Sperrring und den Steuerring axial verschiebt, bis der Sperrring axial gegen die Sperrkörper anstößt. Sobald die Welle eine Position erreicht hat, in der die Umfangsnut der Welle mit den radialen Durchbrüchen fluchtet, werden die Sperrkörper radial nach innen in deren Sperrstellung überführt. Dies erfolgt über die Feder, die den Sperrring und den Steuerring axial verschiebt bis der Sperrring seine geschlossene Position erreicht hat, in der der Sperrring die Sperrkörper radial außen umgreift und in der Sperrstellung hält.

Ein weiterer Verschluss ist aus der EP 2 860 419 A2 bekannt. Dieser Verschluss weist eine Feder auf, die einen Sperrring zur Einnahme der geschlossenen Position mit Kraft beaufschlagt. In der geöffneten Position des Sperrrings lässt sich der Sperrring gegenüber der Längsachse manuell verkippen, wobei ein Sperrabschnitt des Sperrrings in einen Bereich eines Anschlags gelangt und gegen diesen axial abgestützt ist, sodass der Sperrring gegen die Kraft der Feder in der geöffneten Position gehalten ist. Hierbei deckt ein Betätigungsabschnitt des Sperrrings zumindest einen der Sperrkörper radial ab und hält diesen in seiner Sperrstellung. Beim Einschieben der Welle in die Aufnahme wird dieser Sperrkörper radial nach außen bewegt und drückt den Sperrring über den Betätigungsabschnitt zurück in eine zur Längsachse koaxialen Stellung, in der der Sperrabschnitt außerhalb des Bereichs des Anschlags ist und nicht mehr gegen diesen axial abgestützt ist. Somit ist der Sperrring wieder in Richtung zur Einnahme seiner geschlossenen Position federbeaufschlagt. Hierbei besteht jedoch die Gefahr, dass durch eine unbeabsichtigte Berührung oder einen unbeabsichtigten Kontakt von außen mit dem Sperrring dieser in seine koaxiale Stellung überführt wird, sodass die Arretierung unbeabsichtigt aufgehoben wird. Zudem ist nicht ausgeschlossen, dass das Verlagern in die koaxiale Stellung durch Erschütterungen oder Vibrationen erfolgt.

Aufgabe der vorliegenden Erfindung ist es, einen Verschluss bereitzustellen, der einfach aufgebaut ist.

Gelöst wird die Aufgabe durch einen Verschluss zum Sichern einer Kupplungshülse auf einer Welle, insbesondere einer Kupplungshülse einer Gelenkwelle einer Landmaschine auf einer Zapfwelle eines Schleppers. Der Verschluss weist eine Kupplungshülse mit einer entlang einer Längsachse verlaufenden Aufnahme zum Aufnehmen einer Welle und mehrere Sperrkörper, die jeweils in einem radialen Durchbruch der Kupplungshülse zwischen einer Sperrstellung, in der die Sperrkörper zum Eingreifen in eine Umfangsnut der Welle radial nach innen aus den Durchbrüchen in die Aufnahme vorstehen, und einer Freigabestellung radial bewegbar aufgenommen sind, auf. Ferner weist der Verschluss einen Sperrring auf, der zwischen einer geschlossenen Position und einer geöffneten Position relativ zur Kupplungshülse axial verstellbar ist, wobei in der geschlossenen Position ein Sperrabschnitt des Sperrrings die Sperrkörper radial außen umgreift und in der Sperrstellung hält. Der Sperrring ist in der geöffneten Position zwischen einer zur Längsachse zentrierten Stellung und einer exzentrischen Stellung parallel zur Längsachse verstellbar. In der exzentrischen Stellung des Sperrrings befindet sich zumindest ein schaltender Sperrkörper der mehreren Sperrkörper in der Sperrstellung und ist nach radial außen gegen einen Betätigungsabschnitt des Sperrrings abgestützt, wobei durch Verlagern des zumindest einen schaltenden Sperrkörpers in die Freigabestellung der Sperrring über den Betätigungsabschnitt in die zentrierte Stellung überführbar ist.

Bei diesem Aufbau des Verschlusses, bei dem der gesamte Sperrring radial zwischen der zentrierten Stellung und der exzentrischen Stellung, in der der Sperrring in der geöffneten Position arretiert ist, verstellbar ist, wird ein einfacher Aufbau des Verschlusses erzielt, bei dem wenige Bauteile für die Arretierung des Sperrrings erforderlich sind.

Der Sperrring kann in der exzentrischen Stellung gegen einen Arretieranschlag der Kupplungshülse in Richtung zur geschlossenen Position axial abgestützt sein. Hierdurch ist sichergestellt, dass der Sperrring in seiner exzentrischen Stellung nicht axial in die geschlossene Position überführbar ist, sondern in der geöffneten Position fixiert ist.

In einer Ausführungsform des Verschlusses weist dieser ferner ein Gehäuse auf, in dem der Sperrring radial verstellbar geführt ist.

Ferner kann der Verschluss erste Federmittel aufweisen, die den Sperrring in Richtung zur geschlossenen Position mit Kraft beaufschlagen. Somit ist sichergestellt, dass in der geschlossenen Position des Sperrrings die Sperrkörper sicher in der Sperrstellung gehalten sind. Die ersten Federmittel können beliebig ausgestaltet sein, insbesondere als Druckfeder, zum Beispiel in Form einer Schraubenfeder oder Tellerfederanordnung. Denkbar ist auch eine Ausgestaltung in Form eines Elements, dass aus einem elastischen Material, wie Gummi oder einem sonstigen Elastomer, hergestellt ist.

Das Gehäuse kann einen Aufnahmeraum aufweisen, in dem der Sperrring axial unverschiebbar bzw. fixiert und radial verschiebbar aufgenommen ist. Das Gehäuse ist somit zusammen mit dem Sperrring relativ zur Kupplungshülse axial verschiebbar. Der Sperrring ist vor äußeren Einflüssen geschützt, sodass dieser nicht unbeabsichtigt verstellt werden kann.

Der Verschluss kann zweite Federmittel aufweisen, die den Sperrring in Richtung zur exzentrischen Stellung radial mit Kraft beaufschlagen. Damit kann der Sperrring sicher in der exzentrischen Stellung gehalten werden. Darüber hinaus wird der Sperrring bei axialem Verschieben des Sperrrings in die geöffnete Position automatisch in die exzentrische Stellung überführt. Es ist kein manueller Eingriff erforderlich. Die zweiten Federmittel können in dem Aufnahmeraum des Gehäuses aufgenommen sein.

In einer beispielhaften Ausführungsform des Verschlusses weist dieser ein Federführungselement auf, das auf der Kupplungshülse angeordnet ist. Die ersten Federmittel können hierbei auf einem Hülsenabschnitt des Federführungselements angeordnet sein und sich zwischen einem Widerlager des Federführungselements und dem Gehäuse axial abgestützt sein. Die ersten Federmittel können über das Widerlager gegen eine Schulter der Kupplungshülse axial abgestützt sein.

In der geschlossenen Position des Sperrrings kann das Gehäuse gegen einen Sicherungsanschlag an der Kupplungshülse axial abgestützt sein. Somit ist eine definierte axiale Position des Sperrrings gewährleistet.

In der geschlossenen Position des Sperrrings kann der Hülsenabschnitt des Federführungselements vollständig vom Gehäuse abgedeckt sein. In der geöffneten Position des Sperrrings kann das Gehäuse den Hülsenabschnitt des Federführungselements zumindest teilweise freigeben.

Hierbei lässt sich eine Signalisierung der Position des Sperrrings dadurch wirksam erzielen, dass der Hülsenabschnitt des Federführungselements in einer Signalfarbe, wie zum Beispiel rot oder orange, gestaltet ist. In der geschlossenen Position des Sperrrings ist der Hülsenabschnitt des Federführungselements somit von außen nicht sichtbar, sodass die Signalfarbe nicht gesehen wird. Dies zeigt an, dass der Verschluss vollständig geschlossen ist. In der geöffneten Position des Sperrrings ist der Hülsenabschnitt des Federführungselements hingegen zumindest teilweise nicht von dem Gehäuse abgedeckt und somit von außen sichtbar, sodass die Signalfarbe erkannt werden kann. Dies zeigt einem Benutzer an, dass der Verschluss geöffnet ist, bzw. nicht vollständig geschlossen ist.

Das Federführungselement kann ein Führungselement umfassen, auf dem das Gehäuse axial verschiebbar geführt ist, wobei das Führungselement derart ausgestaltet ist, dass ein Verkippen des Gehäuses gegenüber der Längsachse verhindert wird. Das Führungselement kann zum Beispiel als Hülsenabschnitt des Federführungselements ausgestaltet sein, der koaxial zur Längsachse ausgerichtet ist. Alternativ ist auch denkbar, dass das Führungselement als vom Federführungselement separates Bauteil ausgestaltet ist oder ohne Federführungselement vorgesehen ist. Das Führungselement kann in diesem Fall zum Beispiel im Längsschnitt L-förmig oder U-förmig mit einem hülsenförmigen Führungsabschnitt ausgestaltet sein.

Das Gehäuse kann darüber hinaus einen hülsenförmigen Stützabschnitt aufweisen, der zumindest über einen Teil eines Verschiebeweges des Gehäuses auf einer zylindrischen Führungsfläche der Kupplungshülse geführt ist.

Wenn sowohl ein Führungselement als auch der besagte hülsenförmige Stützabschnitt vorgesehen sind, ist eine sichere Führung des Gehäuses gewährleistet, insbesondere wenn das Führungselement und der Stützabschnitt axial voneinander beabstandet sind. Dies führt zudem zu einer äußerst sicheren Anordnung gegen Verkippen des Gehäuses.

Ein bevorzugtes Ausführungsbeispiel wird im Folgenden anhand der Zeichnungen näher erläutert. Hierin zeigt
- Figur 1: eine schematische Draufsicht eines Schleppers mit angehängter Landmaschine,
- Figur 2: einen Verschluss im Längsschnitt in geschlossener Position ohne Welle,
- Figur 3: den Verschluss gemäß Figur 2 in arretierter geöffneter Position ohne Welle,
- Figur 4: den Verschluss gemäß Figur 2 in nicht arretierter geöffneter Position mit teilweise eingeschobener Welle,
- Figur 5: den Verschluss gemäß Figur 2 in geschlossener Position mit vollständig eingeschobener Welle,
- Figur 6: den Verschluss gemäß Figur 2 in arretierter geöffneter Position mit vollständig eingeschobener Welle und
- Figur 7: den Verschluss gemäß Figur 2 in einem Querschnitt.

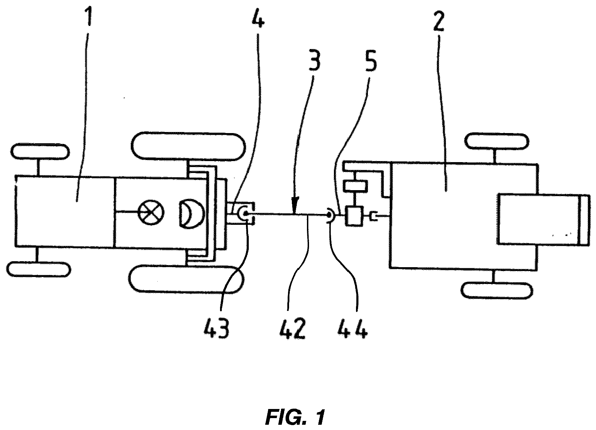

Figur 1 zeigt eine schematische Draufsicht eines Schleppers 1 mit angehängter Landmaschine 2, wobei die Landmaschine 2 vom Schlepper 1 über eine Gelenkwelle 3 angetrieben ist. Hierzu ist die Gelenkwelle 3 schlepperseitig über einen im Folgenden beschriebenen Verschluss drehfest und axial fixiert mit einer Zapfwelle 4 des Schleppers 1 antriebsverbunden. Die Zapfwelle 4 wird vom Schlepper 1 drehend angetrieben.

Landmaschinenseitig ist die Gelenkwelle 3 mit einem Antriebszapfen 5 der Landmaschine 2 antriebsverbunden. Hierbei kann ebenfalls ein Verschluss wie nachfolgend beschrieben eingesetzt werden. Bei der Gelenkwelle 3 kann es sich um eine herkömmliche Kreuzgelenkwelle mit einem längenveränderlichen Wellenabschnitt 42, der jeweils an seinen beiden Enden ein Kreuzgelenk 43, 44 aufweist. Die Kreuzgelenke 43, 44 weisen jeweils eine mit dem Wellenabschnitt 42 verbundene Innengabel und eine mit dieser über ein Zapfenkreuz verbundene Außengabel auf. An zumindest einer Außengabel ist ein Verschluss angeordnet, wie er im Folgenden beschrieben wird. Alternativ kann die Gelenkwelle 3 auch mit zumindest einem Gleichlaufdrehgelenk ausgebildet sein, das ebenfalls mit einem nachfolgend beschriebenen Verschluss versehen sein kann.

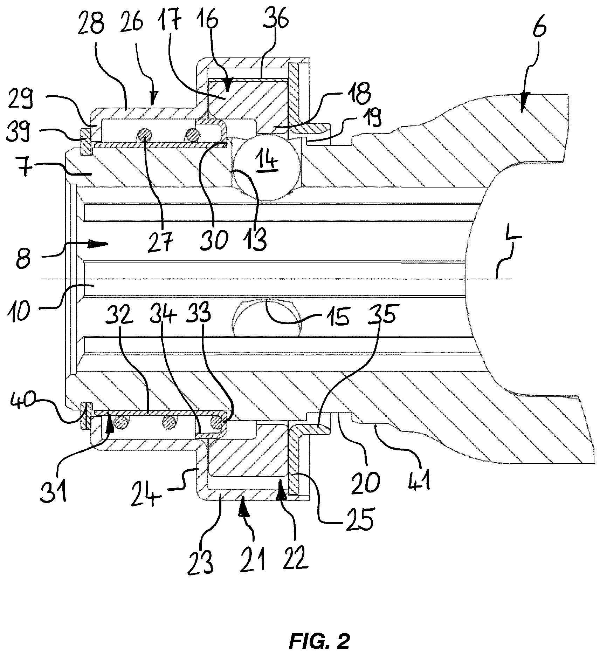

Die Figuren 2 bis 7 zeigen den Verschluss in unterschiedlichen Stellungen und werden im Folgenden zusammen beschrieben.

An einer Gelenkgabel 6 (Außengabel) ist eine Kupplungshülse 7 angeordnet. Die Gelenkgabel 6 ist nur zum Teil dargestellt und ist über ein hier nicht dargestelltes Zapfenkreuz mit einer hier ebenfalls der Übersichtlichkeit halber nicht dargestellten Gelenkgabel (Innengabel) verbunden.

Der Verschluss umfasst eine Kupplungshülse 7, die mit der Gelenkgabel 6 integral verbunden ist und eine Aufnahme 8 aufweist, die sich entlang einer Längsachse L der Kupplungshülse 7 erstreckt. In die Aufnahme 8 ist eine Welle 9, im vorliegenden Fall in Form einer Zapfwelle, in Richtung der Längsachse L einführbar. Die Aufnahme 8 weist eine Keilverzahnung 10 auf, die parallel zur Längsachse L ausgebildet ist und komplementär zu einer Keilverzahnung 11 der Welle 9 ausgebildet ist. Hierdurch wird durch Einschieben der Welle 9 in die Aufnahme 8 eine drehfeste Verbindung zwischen der Welle 9 und der Kupplungshülse 7 erzielt. Die Welle 9 ist darüber hinaus mit einer Ausnehmung in Form einer Umfangsnut 12 um die Längsachse L ausgebildet, wobei die Umfangsnut 12 im vorliegenden Fall lediglich durch Nuten in einem Kopfbereich von Zähnen der Keilverzahnung 11 dargestellt ist. Grundsätzlich kann die Umfangsnut 12 auch radial tiefer ausgebildet sein.

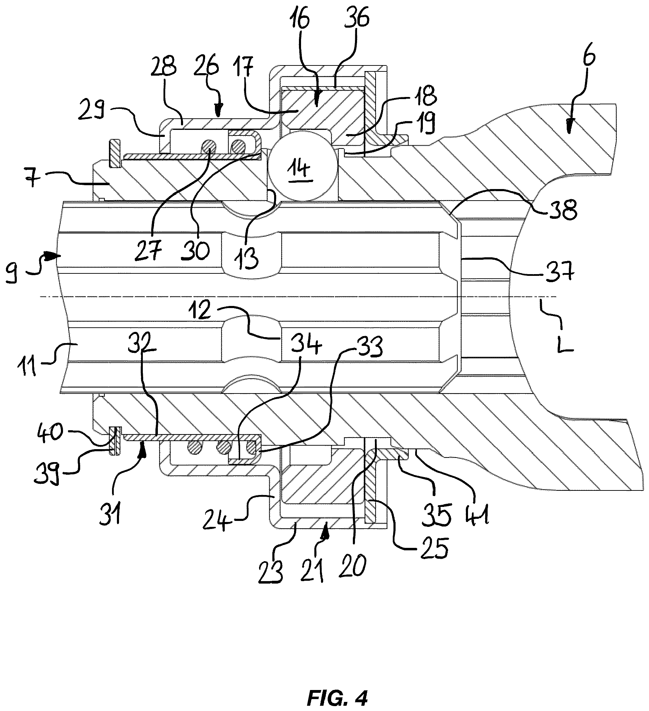

Die Kupplungshülse 7 weist radial verlaufende und umfangsverteilt angeordnete Durchbrüche 13 auf. Die Durchbrüche 13 durchdringen die Kupplungshülse 7 in radialer Richtung vollständig. In den Durchbrüchen 13 ist jeweils ein Sperrkörper 14 in Form einer Kugel radial bewegbar angeordnet. Die Sperrkörper können auch anders geformt sein, zum Beispiel als Rollen. Die Sperrkörper 14 sind hierbei jeweils zwischen einer in Figur 2 dargestellten Sperrstellung und einer in Figur 4 dargestellten Freigabestellung bewegbar. In der Sperrstellung ragen die Sperrkörper 14 radial nach innen aus den Durchbrüchen 13 vor und können in die Umfangsnut 12 der Welle 9 eingreifen, sodass die Welle 9 axial gesichert in der Aufnahme 8 fixiert ist. In der Freigabestellung sind die Sperrkörper 14 so weit radial nach außen verschoben, dass sie nicht nach innen aus den Durchbrüchen 13 vorstehen und ein axiales Bewegen der Welle 9 ermöglichen. Vorzugsweise sind drei Sperrkörper 14 über dem Umfang verteilt angeordnet, wobei auch eine hiervon abweichende Anzahl vorgesehen sein kann. Zur Sicherung der Radialbewegung nach innen befinden sich an den Innenseiten der Durchbrüche 13 Anschläge 15, die die Bewegung der Sperrkörper 14 nach innen begrenzen, sodass diese nicht aus den Durchbrüchen 13 nach innen herausfallen können, wenn keine Welle 9 in die Aufnahme 8 eingeschoben ist.

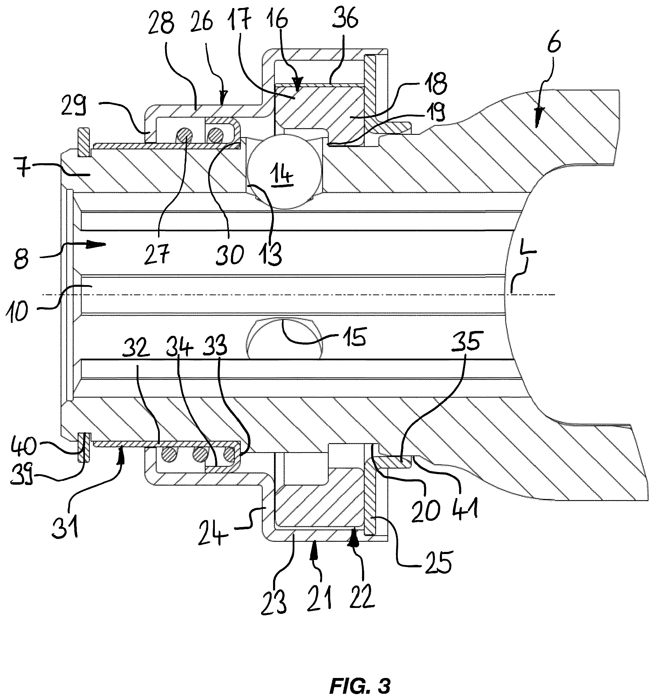

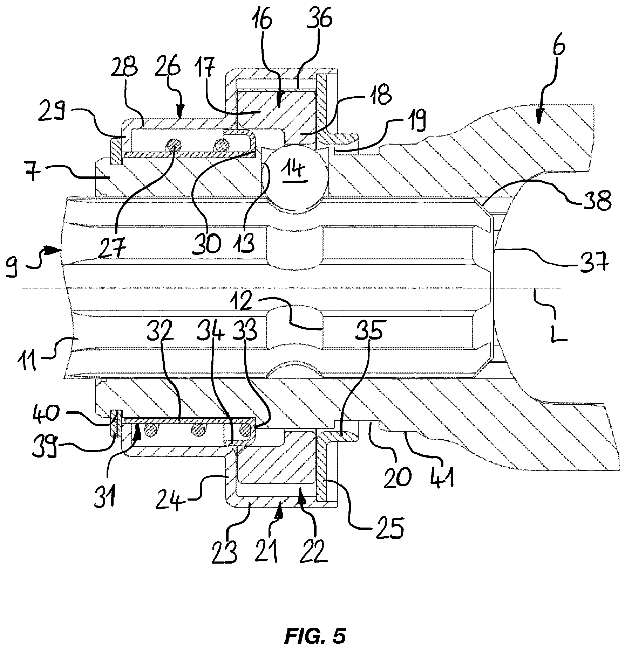

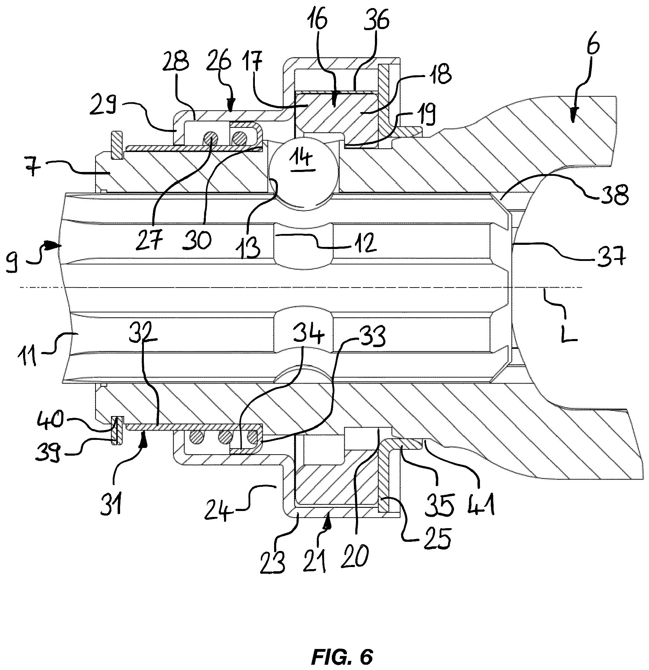

Der Verschluss weist einen Sperrring 16 auf, der zwischen einer geschlossenen Position, wie in den Figuren 2 und 5 dargestellt, und einer geöffneten Position, wie in den Figuren 3 und 6 dargestellt, axial verschiebbar ist. Die Definition der geschlossenen Position und der geöffneten Position bezieht sich auf die axiale Lage des Sperrrings 16 gegenüber der Kupplungshülse 7 und ist unabhängig von der radialen Lage des Sperrrings 16 gegenüber der Kupplungshülse 7. In der geöffneten Position ist der Sperrring 16 zwischen einer zur Längsachse zentrierten Stellung und einer zur Längsachse exzentrischen Stellung gemäß Figuren 3 und 6 radial und parallel zur Längsachse verstellbar.

Der Sperrring 16 weist in axialer Richtung betrachtet nebeneinander einen Betätigungsabschnitt 17 und einen Sperrabschnitt 18 auf. Der Sperrabschnitt 18 weist gegenüber dem Betätigungsabschnitt 17 einen geringeren Innendurchmesser auf und steht somit nach innen vom Betätigungsabschnitt 17 kragenförmig vor. In der geschlossenen Position des Sperrrings 16 ist der Sperrabschnitt 18 axial überlappend zu den Durchbrüchen 13 und den Sperrkörpern 14 angeordnet. Somit umgreift der Sperrabschnitt 18 die Sperrkörper 14 radial außerhalb der Durchbrüche 13. Der Innendurchmesser des Sperrabschnitts 18 ist derart bemessen, dass die Sperrkörper 14 radial außen gegen den Sperrabschnitt 18 abgestützt sind und weiterhin nach innen aus den Durchbrüchen 13 vorstehen. Somit sind die Sperrkörper 14 durch den Sperrabschnitt 18 sicher in ihrer Sperrstellung gehalten, wie dies in den Figuren 2 und 5 dargestellt ist. Hierbei ist jeweils die radiale Erstreckung der Sperrkörper 14 quer zur Längsachse L größer bemessen als die radiale Erstreckung der Durchbrüche 13.

Der Sperrring 16 lässt sich aus seiner geschlossenen Position in Richtung zur Gelenkgabel 6 axial auf der Kupplungshülse 7 verschieben bis der Betätigungsabschnitt 17 des Sperrrings 16 die Sperrkörper 14 umgreift. Grundsätzlich ist auch eine spiegelbildliche Ausgestaltung des Sperrrings 16 denkbar, bei der der Sperrring 16 von der geschlossenen Position zur geöffneten Position in die umgekehrte Richtung geschoben werden müsste. In der geöffneten Position können sich die Sperrkörper 14 radial aus den Durchbrüchen 13 heraus bewegen, bis sie an den Betätigungsabschnitt 17 stoßen, sodass die Sperrkörper 14 an einem weiteren Austreten aus den Durchbrüchen 13 gehindert sind. In dieser Freigabestellung ragen die Sperrkörper 14 nicht mehr aus den Durchbrüchen 13 nach innen vor.

In der Kupplungshülse 7 ist ein Arretieranschlag 19 vorgesehen, der als umlaufende, rondenförmige Fläche ausgebildet ist, die auf einer Ebene senkrecht zur Längsachse L angeordnet ist. Im gezeigten Ausführungsbeispiel ist der Arretieranschlag 19 durch eine Außenumfangsnut 20 in der Kupplungshülse 7 gebildet. In der exzentrischen Stellung des Sperrrings 16 ist dieser axial gegen den Arretieranschlag 19 abgestützt. Hierzu gelangt der Sperrabschnitt 18 über einen Teil seines Umfangs in Anlage zum Arretieranschlag 19, sodass der Sperrring 16 gegen Verstellen in Richtung zur geschlossenen Position gehindert ist.

Der Verschluss umfasst ferner ein Gehäuse 21, in dem der Sperrring 16 radial verstellbar aufgenommen ist. Das Gehäuse 21 bildet einen Aufnahmeraum 22, in dem der Sperrring 16 geführt ist. Der Aufnahmeraum 22 ist ringförmig gestaltet und durch eine äußere hülsenförmige Außenwand 23 und zwei rondenförmige Seitenwände 24, 25 begrenzt, wobei der Aufnahmeraum 22 radial nach innen hin offen ist. Der innere Abstand zwischen den beiden Seitenwänden 24, 25 ist derart bemessen, dass der Sperrring 16 axial nicht gegenüber dem Gehäuse 21 verstellbar ist, wobei ein geringfügiges Axialspiel vorhanden sein kann, um ein leichtes radiales Verstellen quer zur Längsachse zu ermöglichen. Der Sperrring 16 ist somit axial unverschiebbar und radial verschiebbar in dem Gehäuse 21 aufgenommen.

Das Gehäuse 21 weist ferner einen Federaufnahmeabschnitt 26 auf, in dem eine Druckfeder 27 als erste Federmittel aufgenommen ist. Der Federaufnahmeabschnitt 26 schließt sich unmittelbar an den Aufnahmeraum 22 an und ist auf der von der Gabel 6 abgewandten Seite des Aufnahmeraums 22 angeordnet. Der Federaufnahmeabschnitt 26 ist von einer hülsenförmigen Außenwand 28 und eine rondenförmigen Seitenwand 29 gebildet, die radial nach innen von der Außenwand 28 vorsteht.

Mittels der Druckfeder 27 ist der Sperrring 16 in Richtung seiner geschlossenen Position federbeaufschlagt. Hierzu stützt sich die Druckfeder 27 einerseits innen gegen die Seitenwand 29 des Federaufnahmeabschnitts 26 und andererseits gegen eine Schulter 30 der Kupplungshülse 7 axial ab. Somit wird das Gehäuse 21 von der Gelenkgabel 6 weg in eine Position mit Kraft beaufschlagt, die der geschlossenen Position des Sperrrings 16 entspricht. In dieser Stellung ist das Gehäuse 21 über die Seitenwand 29 des Federaufnahmeabschnitts 26 gegen einen Sicherungsanschlag 39 in Form eines Sicherungsrings, der in einer Nut 40 der Kupplungshülse 7 angeordnet ist, axial abgestützt. Da der Sperrring 16 axial unverschiebbar in dem Aufnahmeraum 22 angeordnet ist, wird der Sperrring 16 über das Gehäuse 21 ebenfalls axial verstellt. Die Druckfeder 27 gewährleistet somit, dass der Sperrring 16 sicher in seiner geschlossenen Position gehalten ist.

Im gezeigten Ausführungsbeispiel ist die Druckfeder 27 mittelbar über ein Federführungselement 31 gegen die Schulter 30 abgestützt. Das Federführungselement 31 weist einen Hülsenabschnitt 32 auf, der auf die Kupplungshülse 7 aufgeschoben ist. An einem der Gelenkgabel 6 zugewandten Ende weist das Federführungselement 31 ein Widerlager 33 in Form einer rondenförmigen Wand auf, die sich radial nach außen vom Hülsenabschnitt 32 erstreckt. Gegen das Widerlager 33 ist die Druckfeder 27 axial abgestützt, wobei das Federführungselement 31 axial über das Widerlager 33 gegen die Schulter 30 der Kupplungshülse 7 abgestützt ist. Das Widerlager 33 geht in einen Führungsabschnitt 34 über, der als Führungselementes des Verschlusses dient. Der Führungsabschnitt 34 ist hülsenförmig gestaltet und axial überlappend und koaxial zum Hülsenabschnitt 32 angeordnet. Die Außenwand 28 des Federaufnahmeabschnitts 26 des Gehäuses 21 ist auf dem Führungsabschnitt 34 axial geführt, wobei die hülsenförmige Ausgestaltung des Führungsabschnitts 34 ein Verkippen des Gehäuses 21 quer zur Längsachse L verhindert. Ein Verkippen wird ferner dadurch verhindert, dass die Seitenwand 29 des Federaufnahmeabschnitts 26 auf dem Hülsenabschnitt 32 des Federführungselements 31 geführt ist. Somit ist das Gehäuse 21 axial beabstandet über die Seitenwand 29 des Federaufnahmeabschnitts 26 und den Führungsabschnitt 34 des Federführungselements 31 sicher geführt.

Alternativ ist auch denkbar, dass das Führungselement als vom Federführungselement 31 separates Bauteil ausgestaltet ist oder ohne Federführungselement 31 vorgesehen ist. Das Führungselement kann in diesem Fall zum Beispiel im Längsschnitt L-förmig oder U-förmig mit einem hülsenförmigen Führungsabschnitt ausgestaltet sein.

Zur Führung des Gehäuses 21 ist ferner ein hülsenförmiger Stützabschnitt 35 am Gehäuse 21 vorgesehen, welcher an der der Gelenkgabel 6 zugewandten Seitenwand 25 angeordnet ist. Der Stützabschnitt 35 ist auf einer Führungsfläche 41 der Kupplungshülse 7 axial verstellbar geführt und dient zur weiteren Abstützung und Vermeidung eines Verkippens des Gehäuses 21, insbesondere wenn sich das Gehäuse 21 in einer der geöffneten Position des Sperrrings 16 entsprechenden Stellung befindet, in der das Widerlager 33 und die Seitenwand 29 des Federaufnahmeabschnitts 26 axial nah zueinander angeordnet sind und somit eine geringere Wirkung gegen Verkippen aufweisen. In dieser Position des Gehäuses 21 stützt sich der Stützabschnitt 35 auf einer der Gelenkgabel 6 zugewandten Seite der Außenumfangsnut 20 auf der Führungsfläche 41 der Kupplungshülse 7 ab.

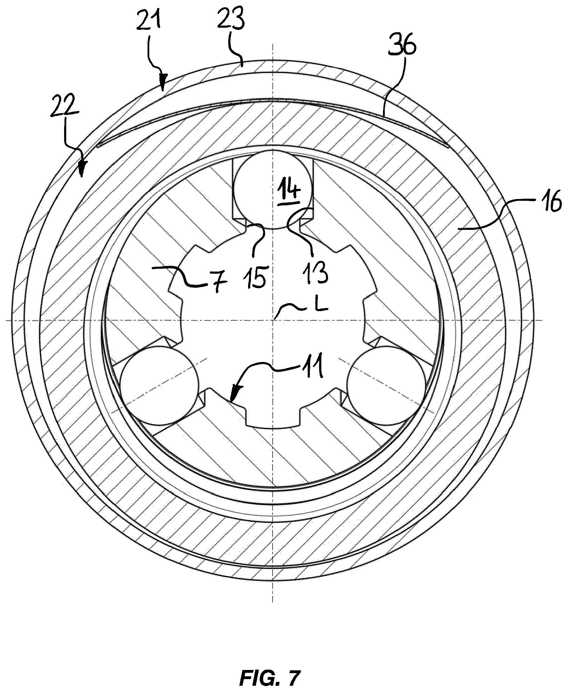

Der Verschluss weist ferner eine Blattfeder 36 als zweite Federmittel auf. Die Blattfeder 36 beaufschlagt den Sperrring 16 in Richtung zur Einnahme seiner exzentrischen Stellung. Hierfür ist die Blattfeder 36 im Aufnahmeraum 22 zwischen der Außenwand 23 des Aufnahmeraums 22 und dem Sperrring 16 angeordnet. Die Blattfeder 36 erstreckt sich über einen Teil des Umfangs des Sperrrings 16 und weist eine geringere Krümmung auf, als eine Außenumfangsfläche des Sperrrings 16. Die Blattfeder 36 ist somit an ihren freien Enden gegen die Außenwand 23 des Aufnahmeraums 22 nach radial außen abgestützt und ist in einem mittleren Bereich zwischen den beiden freien Enden nach innen gegen den Sperrring 16 abgestützt und beaufschlagt diesen in Richtung zur exzentrischen Stellung, wie dies in Figur 7 dargestellt ist.

Zum Verbinden der Kupplungshülse 7 mit der Welle 9 kann sich der Verschluss in der in Figur 2 dargestellten Position befinden. Dies bedeutet, dass die Welle 9 noch nicht in die Aufnahmen 8 eingeschoben ist und sich der Sperrring 16 in seiner geschlossenen Position befindet, in der die Sperrkörper 14 in ihrer Sperrstellung gesichert sind. Aus dieser Stellung kann das Gehäuse 21 manuell in Richtung zur Gelenkgabel 6 gegen die Federkraft der Druckfeder 27 gezogen werden, bis der Sperrabschnitt 18 des Sperrrings 16 mit der Außenumfangsnut 20 der Kupplungshülse 7 fluchtet. In dieser Stellung wird der Sperrring 16 automatisch von seiner zentrierten Stellung in seine exzentrischen Stellung parallel zur Längsachse L verschoben, da die Blattfeder 36 den Sperrring 16 zur Einnahme der exzentrischen Stellung mit Kraft beaufschlagt. In der exzentrischen Stellung befindet sich ein Teilumfang des Sperrabschnitts 18 in der Außenumfangsnut 20, sodass beim Loslassen des Gehäuses 21 der Sperrabschnitt 18 gegen den Arretieranschlag 19 in Anlage gelangt. Dies erfolgt durch die Kraftbeaufschlagung der Druckfeder 27, durch welche das Gehäuse 21 und damit der Sperrring 16 in Richtung zur geschlossenen Position mit Kraft beaufschlagt wird. Das Erreichen der geschlossenen Position wird jedoch dadurch verhindert, dass der Sperrabschnitt 18 des Sperrrings 16 an den Arretieranschlag 19 anstößt. Der Sperrring 16 befindet sich somit in der arretierten geöffneten Position. In dieser Position sind die Sperrkörper 14 vom Betätigungsabschnitt 17 des Sperrrings 16 umgeben. Durch die radiale Verschiebung des Sperrrings 16 befindet sich ein Teil des Umfangs des Betätigungsabschnitts 17 näher an der Kupplungshülse 7 als ein diametral gegenüberliegender Umfangsabschnitt des Betätigungsabschnitts 17, wie dies in Figur 3 ersichtlich ist. Das bedeutet, dass der Abstand zwischen dem Betätigungsabschnitt 17 und einem der Sperrkörper 14, der als schaltender Sperrkörper bezeichnet werden kann, geringer ist, als der Abstand zwischen dem Betätigungsabschnitt 17 und den übrigen Sperrkörper 14. In Figur 3 ist der oberhalb der Längsachse L angeordnete Sperrkörper 14 der schaltende Sperrkörper 14. Der Abstand zwischen dem schaltenden Sperrkörper 14 und dem Betätigungsabschnitt 17 ist so gering, dass der schaltende Sperrkörper 14 stets in einer Position gehalten ist, in der er nach innen aus dem jeweiligen Durchbruch 13 vorsteht. Die übrigen Sperrkörper 14 können vollständig in ihre jeweiligen Durchbrüche 13 eintauchen.

In dieser arretierten geöffneten Position des Sperrrings 16 kann die Kupplungshülse 7 auf die Welle 9 aufgeschoben werden oder umgekehrt die Welle 9 in die Aufnahme 8 der Kupplungshülse 7 eingeschoben werden. Die Welle 9 weist eine zentrale Stirnfläche 37 an einem freien Ende der Welle 9 auf. Die Stirnfläche 37 geht radial außen in Schrägflächen 38 über, die auf einer konischen Umhüllenden angeordnet sind. Mit anderen Worten, sind die Schrägflächen 38 schräg zur Längsachse L angeordnet. Beim Einschieben der Welle 9 in die Aufnahme 8 wird der schaltender Sperrkörper 14 durch eine der Schrägflächen 38 radial nach außen gedrückt, bis der schaltende Sperrkörper 14 vollständig radial nach außen in den Durchbruch 13 eintaucht. Hierdurch wird der schaltende Sperrkörper 14 radial nach außen gegen die Federkraft der Blattfeder 36 gedrückt, sodass der Sperrring 16 aus seiner exzentrischen Stellung in seine zentrierte Stellung gemäß Figur 4 überführt wird. Hierbei gelangt der Sperrabschnitt 18 außer Eingriff zum Arretieranschlag 19, sodass durch die Federkraft der Druckfeder 27 das Gehäuse 21 und damit der Sperrring 16 in Richtung zur geschlossenen Position mit Kraft beaufschlagt wird. Der Sperrring 16 kann hierbei so weit in Richtung zur geschlossenen Position verschoben werden, bis der Sperrabschnitt 18 axial gegen die Sperrkörper 14 in Anlage gelangt.

Im weiteren Verlauf des Einschiebens der Welle 9 in die Aufnahme 8 gelangt die Umfangsnut 12 der Welle 9 in Überdeckung zu den Durchbrüchen 13 und den Sperrkörpern 14. In dieser Position (Figur 5) drückt der Sperrabschnitt 18 durch die axiale Kraftbeaufschlagung die Sperrkörper 14 radial nach innen in die Durchbrüche 13, bis diese innen aus den Durchbrüchen 13 vorstehen und in die Umfangsnut 12 der Welle 9 eingreifen, wie dies in Figur 5 dargestellt ist. In dieser Position ist die Welle 9 axial sicher in der Kupplungshülse 7 fixiert.

Zum Lösen der Kupplungshülse 7 von der Welle 9 wird das Gehäuse 21 wieder in Richtung zur Gelenkgabel 6 verschoben, bis der Sperrabschnitt 18 des Sperrrings 16 mit der Außenumfangsnut 20 der Kupplungshülse 7 fluchtet und der Sperrring 16 radial in die Außenumfangsnut 20 eingreift und nach Loslassen des Gehäuses 21 gegen den Arretieranschlag 19 arretiert ist. In dieser Stellung kann die Welle 9 aus der Aufnahme 8 herausgezogen werden. Hierbei wird der schaltende Sperrkörper 14 von der Außenkontur der Welle 9 radial nach außen in den Durchbruch 13 gedrückt, bis dieser den Betätigungsabschnitt 17 und damit den Sperrring 16 radial in die zentrierte Stellung überführt. Die Welle 9 befindet sich dann wieder in einer Stellung gemäß Figur 4, wobei der Sperrring 16 teilweise geöffnet ist und nicht arretiert ist. Sobald die Welle 9 vollständig aus der Ausnahme herausgezogen ist, wird der Sperrring 16 aufgrund der Federkraft der Druckfeder 27 wieder in die geschlossene Position überführt, sodass sich die Situation gemäß Figur 2 ergibt.

### Bezugszeichenliste

- 1: Schlepper
- 2: Landmaschine
- 3: Gelenkwelle
- 4: Zapfwelle
- 5: Antriebszapfen
- 6: Gelenkgabel
- 7: Kupplungshülse
- 8: Aufnahme
- 9: Welle
- 10: Keilverzahnung
- 11: Keilverzahnung
- 12: Umfangsnut
- 13: Durchbruch
- 14: Sperrkörper
- 15: Anschlag
- 16: Sperrring
- 17: Betätigungsabschnitt
- 18: Sperrabschnitt
- 19: Arretieranschlag
- 20: Außenumfangsnut
- 21: Gehäuse
- 22: Aufnahmeraum
- 23: Außenwand
- 24: Seitenwand
- 25: Seitenwand
- 26: Federaufnahmeabschnitt
- 27: Druckfeder (erste Federmittel)
- 28: Außenwand
- 29: Seitenwand
- 30: Schulter
- 31: Federführungselement
- 32: Hülsenabschnitt
- 33: Widerlager
- 34: Führungsabschnitt (Führungselement)
- 35: Stützabschnitt
- 36: Blattfeder (zweite Federmittel)
- 37: Stirnfläche
- 38: Schrägfläche
- 39: Sicherungsanschlag
- 40: Nut
- 41: Führungsfläche
- 42: Wellenabschnitt
- 43: Kreuzgelenk
- 44: Kreuzgelenk

## Patentansprüche

1. Verschluss zum Sichern einer Kupplungshülse (7) auf einer Welle (9), umfassend:
eine Kupplungshülse (7) mit einer entlang einer Längsachse (L) verlaufenden Aufnahme (8) zum Aufnehmen einer Welle (9),
mehrere Sperrkörper (14), die jeweils in einem radialen Durchbruch (13) der Kupplungshülse (7) zwischen einer Sperrstellung, in der die Sperrkörper (14) zum Eingreifen in eine Umfangsnut (12) der Welle (9) radial nach innen aus den Durchbrüchen (13) in die Aufnahme (8) vorstehen, und einer Freigabestellung radial bewegbar aufgenommen sind, und
einen Sperrring (16), der zwischen einer geschlossenen Position und einer geöffneten Position relativ zur Kupplungshülse (7) axial verstellbar ist, wobei in der geschlossenen Position ein Sperrabschnitt (18) des Sperrrings (16) die Sperrkörper (14) radial außen umgreift und in der Sperrstellung hält,
**dadurch gekennzeichnet,**
**dass** der Sperrring (16) in der geöffneten Position zwischen einer zur Längsachse (L) zentrierten Stellung und einer exzentrischen Stellung parallel zur Längsachse (L) verstellbar ist, und
**dass** in der exzentrischen Stellung des Sperrrings (16) sich zumindest ein schaltender Sperrkörper (14) der mehreren Sperrkörper (14) in der Sperrstellung befindet und nach radial außen gegen einen Betätigungsabschnitt (17) des Sperrrings (16) abgestützt ist, wobei durch Verlagern des zumindest einen schaltenden Sperrkörpers (14) in die Freigabestellung der Sperrring (16) über den Betätigungsabschnitt (17) in die zentrierte Stellung überführbar ist.

2. Verschluss nach Anspruch 1,
**dadurch gekennzeichnet,**
**dass** der Sperrring (16) in der exzentrischen Stellung gegen einen Arretieranschlag (19) der Kupplungshülse (7) in Richtung zur geschlossenen Position axial abgestützt ist.

3. Verschluss nach Anspruch 1 oder 2,
**dadurch gekennzeichnet,**
**dass** der Verschluss ein Gehäuse (21) umfasst, in dem der Sperrring (16) radial verstellbar geführt ist.

4. Verschluss nach Anspruch 3,
**dadurch gekennzeichnet,**
**dass** der Verschluss erste Federmittel (27) umfasst, die den Sperrring (16) in Richtung zur geschlossenen Position mit Kraft beaufschlagen.

5. Verschluss nach Anspruch 4,
**dadurch gekennzeichnet,**
**dass** die ersten Federmittel als Druckfeder (27) ausgebildet sind.

6. Verschluss nach einem der Ansprüche 3 bis 5,
**dadurch gekennzeichnet,**
**dass** das Gehäuse (21) einen Aufnahmeraum (22) aufweist, in dem der Sperrring (16) axial unverschiebbar und radial verschiebbar aufgenommen ist.

7. Verschluss nach einem der Ansprüche 3 bis 6,
**dadurch gekennzeichnet,**
**dass** der Verschluss zweite Federmittel (36) umfasst, die den Sperrring (16) in Richtung zur exzentrischen Stellung mit Kraft beaufschlagen.

8. Verschluss nach Anspruch 7,
**dadurch gekennzeichnet,**
**dass** die zweiten Federmittel (36) im Aufnahmeraum (22) des Gehäuses (21) aufgenommen sind.

9. Verschluss nach einem der Ansprüche 4 bis 8,
**dadurch gekennzeichnet,**
**dass** der Verschluss ein Federführungselement (31) umfasst, das auf der Kupplungshülse (7) angeordnet ist,
**dass** die ersten Federmittel (27) auf einem Hülsenabschnitt (32) des Federführungselements (31) angeordnet sind, und
**dass** die ersten Federmittel (27) zwischen einem Widerlager (33) des Federführungselements (31) und dem Gehäuse (21) axial abgestützt sind.

10. Verschluss nach Anspruch 9,
**dadurch gekennzeichnet,**
**dass** die ersten Federmittel (27) über das Widerlager (33) gegen eine Schulter (30) der Kupplungshülse (7) axial abgestützt sind.

11. Verschluss nach einem der Ansprüche 3 bis 10,
**dadurch gekennzeichnet,**
**dass** das Gehäuse (21) in der geschlossenen Position des Sperrrings (16) gegen einen Sicherungsanschlag (39) axial abgestützt ist.

12. Verschluss nach einem der Ansprüche 9 bis 11,
**dadurch gekennzeichnet,**
**dass** das Gehäuse (21) in der geschlossenen Position des Sperrrings (16) den Hülsenabschnitt (32) des Federführungselements (31) vollständig abdeckt und in der geöffneten Position des Sperrrings (16) zumindest teilweise freigibt.

13. Verschluss nach einem der Ansprüche 3 bis 12,
**dadurch gekennzeichnet,**
**dass** der Verschluss ein Führungselement (34) umfasst, auf dem das Gehäuse (21) axial verschiebbar geführt ist.

14. Verschluss nach einem der Ansprüche 3 bis 13,
**dadurch gekennzeichnet,**
**dass** das Gehäuse (21) einen hülsenförmigen Stützabschnitt (35) aufweist, der zumindest über einen Teil eines Verschiebeweges des Gehäuses (21) auf einer zylindrischen Führungsfläche (41) der Kupplungshülse (7) geführt ist.
